# DEMANDE DE BREVET EUROPEEN

(11) **EP 1 142 756 A2**
(43) Date de publication de la demande: **10.10.2001**
(21) Numéro de dépôt: 01500093.8
(22) Date de dépôt: 03.04.2001
(51) Int. Cl.: B60P 7/10

(54) **Etriers pour le transports de planche**

(30) Priorité: 04.04.2000 ES 200000912 U
(71) Demandeur: Cuenca Candel, Antonio, 07011 Palma de Mallorca (Baleares) (ES)
(72) Inventeur: Cuenca Candel, Antonio, 07011 Palma de Mallorca (Baleares) (ES)
(74) Mandataire: Manzano Cantos, Gregorio (ES)

(57) **Abrégé**

Etriers pour le transport de planches fragiles, en particulier et de tout matériel en général, constitués par un jeu de quatre jambes de forces assorties par paires et unies par des traverses inférieures télescopées sur celles-ci sur lesquelles elles s'appuient en demeurant assujetties entre les jambes de forces au moyen d'organes de bandage dans l'espace adéquat contrôlé par des moyens de réglage prévus au pied desdites jambes de force en formant un emballage sûr et récupérable pour un paquet de planches.

## Description

L'invention concerne selon le titre de celle-ci une structure d'appui, de support ou d'étaiement pour le transport en camions ou plate-formes autotransporteuses de tout genre de planches; plus précisément de planches de verre, pierre naturelle ou artificielle, c'est à dire fragiles et même des planches de métal, fer ou acier.

L'objet de l'invention comprend un jeu d'étriers ayant une forme déterminée mais très simple monté sur la plate-forme du véhicule sous des conditions réglables pour délimiter, fixer et renforcer l'espace de position de la marchandise, dont la section peut embrasser depuis un espace minimal à un espace maximal déterminé par un organe de séparation et de soutien de ladite marchandise.

L'objet de l'invention selon les caractéristiques citées est réutilisable en permanence, en considérant que son utilisation, sauf usures résultantes et élémentaires et cassures ou d'autres effets consécutifs du temps et de l'utilisation, ils pourraient être estimer en tant qu'éternels.

### ANTÉCÉDENTS DE L'INVENTION.

Il existe des formes connues pour le transport de planches fragiles, plus précisément pour les planches de verre ou de cristal et on connaît des structures en bois ou des chevalets à dimensions fixes, logiquement à grandes dimensions pour permettre le transport de formats à grandes dimensions et ceux à petite dimension.

Les moyens de soutien desdites planches sont compliqués surtout dans le transport de planches à différentes dimensions, ce qui est très fréquent, en produisant des cassures assez facilement, car la tension de serrage n'est pas uniforme et les moyens utilisés sont divers et jusqu'à présent très artisanaux.

Il en arrive de même pour les armatures ou chevalets qui, en étant en bois, et demeurant à l'intempérie en frottement continu avec lesdites planches, oblige à les remplacer assez fréquemment.

Les supports utilisés dans d'autres types de transport de planches, sont normalement en bois mais ils sont construits exprès pour le type, format et dimensions de celles-ci se qui oblige à s'en débarrasser une fois le transport réalisé.

### DESCRIPTION DE L'INVENTION.

L'invention concerne un jeu de supports d'appui, de structures tubulaires et sous forme de "L", de préférence métalliques, résistants et légers, disposés sur une plate-forme de transport alignés, par paires, transversalement et longitudinalement unis, de manière que tous les côtés externes des supports, plus précisément de la jambe de force sont en regard en délimitant, entre eux, un espace pour la disposition et le soutien de la marchandise qui sera convenablement assujettie entre lesdites jambes de force par ajustage transversal de l'espace et des moyens d'arrimage convenablement disposés.

Les jambes de forces desdits supports sous forme de "L", selon l'invention, ont une hauteur supérieure à celle des planches les plus hautes qui prévisiblement vont être attachées entre elles, de manière que, des moyens de bandage et de fixation de la marchandise, soient situés par dessus celles-ci.

Ces moyens, selon une autre caractéristique de l'invention, sont constitués de jambes étrières transversales démontables montés aux extrémités supérieures desdits jambes de force à travers des trous ou des rainures pour leur réglage, prévus à des points en regards de ceux-ci de façon qu'une extrémité de ladite jambe étrière a des moyens fixes de butée et l'autre des moyens mécaniques de réglage de la fixation, tel qu'un segment à denture à vis à écrou papillon pour une meilleure manipulation.

Un autre détail de l'invention est que le pied ou appui de la jambe de force a des rainures le long de sa base supérieure. Des rainures entre lesquelles passe verticalement un membre de serrage qui est monté sur le membre transversal d'union. Un membre tubulaire télescopé entre les deux pieds d'appui des étriers respectifs transversalement parallèles qui comporte aussi une rainure en regard de l'antérieure entre lesquelles passe ledit membre de serrage qui est serré contre le plan intérieur de ladite traverse d'union.

Un membre de serrage, selon l'invention, constitué par un tige filetée à tête fixe intérieurement et un écrou papillon ou mors à leviers extérieurs pour une meilleure manipulation.

De cette façon l'invention comprend deux moyens de soutien, l'un de tension horizontale pour serrage de la charge et un autre de tension verticale pour serrage des jambes de force.

Un autre détail de l'invention est que pour l'union longitudinale du jeu de jambes de force, on dispose d'une planche ou platine fixée par dessus et par dessous les deux traverses, l'inférieure pour le renfort de toute la structure et le nivellement de ces traverses et le plan d'appui, et la supérieure pour renforcer également la structure et pour l'appui de la marchandise.

Une idée plus large des caractéristiques de l'invention sera développée à la suite, en faisant référence aux feuilles de dessins accompagnant ce mémoire, d'une manière schématique et uniquement à mode d'exemple, en représentant les détail préférés et importants du brevet.

### DANS LES DESSINS:

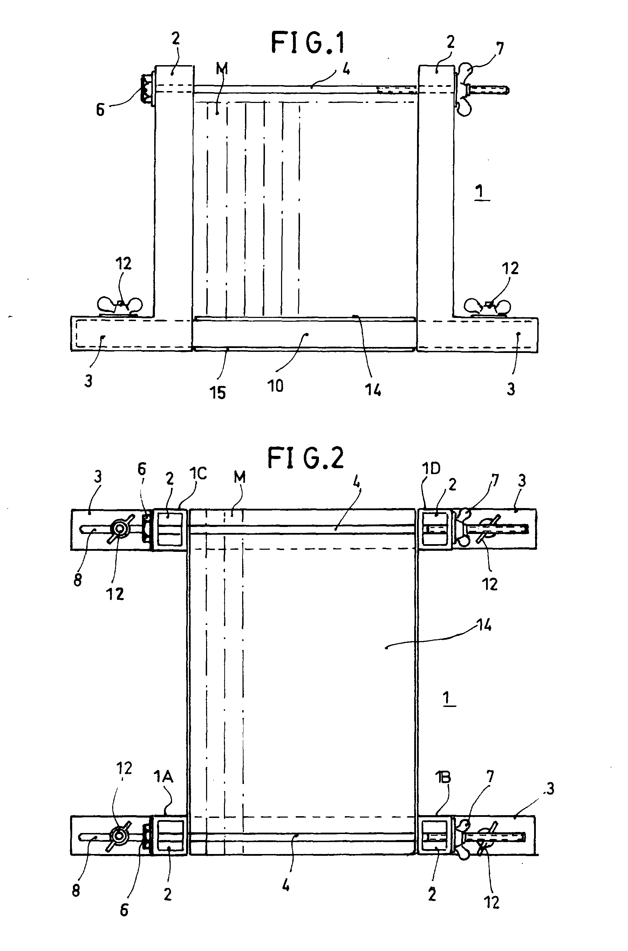

La figure 1 est une vue en projection d'un jeu de supports en position de travail.

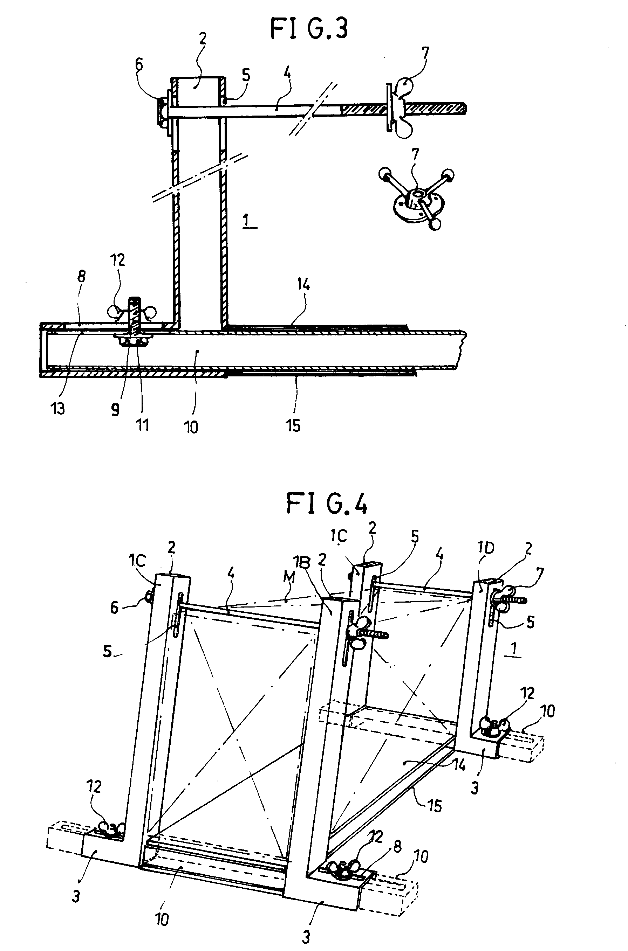

La figure 2 est une vue en plan supérieure à 90º de la figure antérieure.

La figure 3 est un détail agrandi et sectionné des membres de serrage et d'union desdits supports.

La figure 4 est une vue en perspective de l'ensemble de la figure 1.

### RÉALISATION PRÉFÉRÉE DE L'INVENTION.

Selon la représentation montrée sur lesdits dessins l'invention est constituée d'un jeu de supports indiqués généralement par (1), particulièrement par un jeu de quatre supports (1A.1B, 1C y 1D) sous forme de "L" desquels, les jambes de force (2) sont les membres de serrage pour la marchandise (M), et les appuis horizontaux (3), sont le membres d'appui sur la plate-forme, non représentée, du véhicule.

Les jambes de force (2) comprennent à leur extrémité supérieure et par dessus la marchandise (M), un membre transversal ou tige (4) pour serrer la marchandise (M) monté à travers des trous ou rainures correspondants (5), pour régler son hauteur, qui contient chaque jambe de force (2) en regard.

La tige (4) incorpore des moyens de serrage fixes (6) par une des extrémités et par l'autre des membres de serrage libre (7) facilement manipulables, tel qu'un écrou papillon ou mors à leviers.

Avec ces moyens et avec la tension calculée précise à chaque cas et avec l'interposition des moyens d'amortissement nécessaire, on serre la marchandise en l'assujettissant correctement pour un transport sûr.

Les appuis horizontaux (3) ont des rainures longitudinales (8) sur la base supérieure de l'appui et à travers lesdites rainures l'on monte le moyen de fixation (9) correspondant qui est une tige filetée contre le plan intérieur de la traverse tubulaire d'union (10) qui se télescope entre les appuis (3) des jambes de forces (1A,1B) et (1C,1D) parallèlement et transversalement en regard. Plan intérieur dans lequel sont en butée une tête fixe (11) de ladite tige (9) pour assurer le serrage d'un élément de serrage libre (12), par exemple un écrou papillon ou mors à leviers, pour fixer fermement les jambes de forces (1).

À ces effets, lesdites traverses (10), à leurs extrémités et en coïncidence avec lesdites rainures (8), ont d'autres rainures (13) entre lesquelles passe ledit moyen de fixation (9) avec ses moyens correspondants de serrage (11) et (12).

La longueur des rainures (8) et (13) permet de régler la séparation entre les jambes de force (1) et par conséquent l'espace utile pour la marchandise (M) et la tige (4) de serrage transversal sera adaptée à cette séparation pour l'assujettissement correcte et sûr de la marchandise (M), parfois des planches de matériel délicates ou fragiles.

Pou ladite séparation entre les jambes de force (1) et pour l'union longitudinale entre les traverses (10) l'on dispose des platines ou des planches, sur la base supérieure (14) en tant que surface d'appui de la marchandise (M) et en tant que renfort, et sur la base inférieure (15), en tant que renfort et supplément entre ladite traverse (10) et le plan de base des appuis(3).
Une fois décrite convenablement la nature de l'invention il faut remarquer aux effets opportuns, que celle-ci n'est pas limitée aux détails exacts de cette exposition, mais qu'au contraire, on y introduira les modification considérée opportunes, toutefois que cela ne modifie pas les caractéristiques essentielles de celle-ci, revendiquées à la suite.

## Revendications

1. ETRIERS POUR LE TRANSPORT DE PLANCHES constitué d'un jeu de supports métalliques de structure tubulaire préférée **CARACTÉRISÉS en ce que** c'est, de préférence, un jeu de quatre supports (1) sous forme générale en "L" (1A, 1B,1C y 1D) disposés sur une plate-forme autoportante alignés, par paires, longitudinalement et transversalement, avec un espace dimensionable de séparation entre ceux-ci pour placer la marchandise (M) qui est assujettie par des membres transversaux (4) situés par dessus ladite marchandise et des membres de fixation verticale (9) situés sur les appuis horizontaux (3) desdits supports (1) qui sont unis par des traverses tubulaires respectives (10) télescopées dans lesdits pieds d'appui (3).

2. ETRIERS POUR LE TRANSPORT DE PLANCHES selon la revendication 1, un membre (4) pour 1 tension transversale et l'assujettissement de la marchandise (M) est **CARACTÉRISÉ en ce qu'**il est une tige disposée entre les extrémités supérieures des jambes de force (2) traversée par des trous correspondants ou rainures (5) pour le réglage vertical et munie d'organes correspondants de serrage à chaque extrémité, fixes (6) et libres (7), facilement manipulables tels qu'un écrou papillon ou des mors à leviers.

3. ETRIERS POUR LE TRANSPORT DE PLANCHES selon la revendication 1. les membres verticaux de serrage (9) sont **CARACTÉRISÉS en ce qu'**ils sont constitués par des tiges filetées logées dans la rainure correspondante (8) de la base supérieure de l'appui (3) et la rainure (13) coïncidente de ladite traverse (10) étant en butée contre le plan intérieur de celle-ci, une tête fixe (11) de ladite tige (9) et contre la base supérieure de l'appui (3) au moyen du membre de serrage libre (12), par exemple: un écrou papillon ou mors à leviers.

4. ETRIERS POUR LE TRANSPORT DE PLANCHES selon les revendications 1 et 3 les traverses (10) d'union des jambes de force (1) sont CARACTÉRISÉES en ce longitudinalement, dans l'espace destiné à la marchandise (M), par dessus et au moyen d'une planche ou platine (14) et par dessous et au moyen d'une planche ou platine (15), elles sont unies pour renforcer la structure et de plus, la première, pour l'appui de la marchandise (M) et, la deuxième, pour niveler la base d'appui des jambes de force (1).
